# EUROPÄISCHE PATENTSCHRIFT

(11) **EP 3 566 893 B1**
(45) Veröffentlichungstag und Bekanntmachung des Hinweises auf die Patenterteilung: **13.10.2021**
(21) Anmeldenummer: 19164806.2
(22) Anmeldetag: 25.03.2019
(51) Int. Cl.: B60L 3/00, B60L 15/20

(54) **FLÜSSIGKEITSGEKÜHLTES ELEKTRISCHES ANTRIEBSSYSTEM**
LIQUID COOLED ELECTRIC DRIVE SYSTEM
SYSTÈME D'ENTRAÎNEMENT ÉLECTRIQUE REFROIDI PAR LIQUIDE

(30) Priorität: 07.05.2018 DE 102018207007
(43) Veröffentlichungstag der Anmeldung: 13.11.2019
(73) Patentinhaber: Audi AG, 85045 Ingolstadt (DE)
(72) Erfinder: Hüttl, Martin, 85049 Ingolstadt (DE); Till, Stefan, 85049 Ingolstadt (DE)

(56) Entgegenhaltungen:
- WO-A2-2014/053316
- DE-A1-102014 218 453
- US-A1- 2012 133 314
- US-B1- 7 739 005

## Beschreibung

Die Erfindung betrifft ein flüssigkeitsgekühltes elektrisches Antriebssystem für ein Kraftfahrzeug und ein Verfahren zum Betreiben des Antriebssystems.

Zum Betrieb eines flüssiggekühlten elektrischen Antriebs, der mindestens eine elektrische Maschine und einen Pulswechselrichter mit zugehöriger Leistungselektronik umfasst, werden elektrische Kühlmittelpumpen benötigt, die über das 12V-Bordnetz versorgt sind. Die zusätzlichen Pumpen besitzen die Aufgabe, einen Mindestvolumenstrom in den Komponenten zu gewährleisten, damit die Abwärme durch entstehende Verlustleistung der Komponenten an das Kühlmedium übertragen wird. Anschließend wird das Kühlmedium im Kühler abgekühlt und erneut den Komponenten zugeführt. Bei einem Elektrofahrzeug mit Mehr-Maschinen-Konzept werden sowohl Vorderachse als auch Hinterachse an das Kühlsystem angebunden.

Treten Probleme mit der Kühlung auf, die zu einem verminderten Kühlmittelvolumenstrom oder einem Ausfall des Kühlmittelvolumenstroms führen, so führt die entstehende Abwärme innerhalb kürzester Zeit zum Ausfall aller elektrischen Antriebe im Fahrzeug. Das Fahrzeug kann nicht mehr selbständig bewegt werden.

Moderne Elektrofahrzeuge sind in den meisten Fällen mit mehreren elektrischen Antrieben ausgestattet.

Beispielsweise ist aus der DE 199 03 443 A1 eine Antriebseinheit für ein elektrisch betriebenes Fahrzeug bekannt. Das Fahrzeug nutzt ein Getriebe, bei dem mindestens zwei elektrische Maschinen in einem Getriebegehäuse untergebracht sind und alternierend betrieben werden.

Es sind bereits spezielle Konstruktionen flüssiggekühlter E-Maschinen bekannt, bei denen das Kühlmittel sich in der E-Maschine ohne zusätzliche Kühlmittelpumpe verteilt.

So geht aus der DE 10 2004 049 795 A1 eine Kühlvorrichtung für eine mit einer Kühlflüssigkeit kühlbare elektrische Maschine hervor, bei der über eine Zuführeinrichtung Kühlflüssigkeit in einen Rotor einer elektrischen Maschine eingebracht wird und sich durch die wirkenden Fliehkräfte innerhalb der elektrischen Maschine verteilt. Die Kühlflüssigkeit wird über eine Abführeinrichtung aus der elektrischen Maschine abgeführt und einem Kühlflüssigkeitskühler zugeleitet.

Die DE 29 42 811 A1 offenbart eine Vorrichtung zur Flüssigkeitskühlung der Läuferwicklung einer elektrischen Maschine. Die elektrische Maschine bringt eine Kühlflüssigkeit unter Ausnutzung eines Fliehkraftdrucks zur Zirkulation.

Die US2012133314 A1 offenbart ein Hybridfahrzeug sowie ein Elektrofahrzeug mit mehreren Maschinen in der der eine limitierte Leistungsabfrage des Motors oder einer Maschine von anderen Maschinen kompensiert wird.

Vor diesem Hintergrund hat sich die vorliegende Erfindung die Aufgabe gestellt, die Nachteile des Standes der Technik zumindest zum Teil zu beseitigen.

Die Aufgabe wird erfindungsgemäß gelöst durch ein Antriebssystem mit den Merkmalen des unabhängigen Patentanspruchs 1 und ein Verfahren mit den Merkmalen des Patentanspruchs 3.

Ausgestaltungen ergeben sich aus den abhängigen Ansprüchen und der Beschreibung.

Die Erfindung beruht auf der Erkenntnis, dass bei einem durch mehrere elektrische Maschinen angetriebenen Elektrofahrzeug durch geeigneten Betrieb bzw. geeignete Ansteuerung der elektrischen Maschinen auch ohne separate elektrische Kühlmittelpumpe in einem Großteil der Fahrsituationen eine ausreichende Kühlfunktion ermöglicht werden kann.

Gegenstand der Erfindung ist ein flüssigkeitsgekühltes elektrisches Antriebssystem für ein Kraftfahrzeug. Das Antriebssystem weist mindestens zwei Antriebseinheiten auf, die jeweils eine elektrische Maschine und eine ihr zugeordnete Leistungselektronik umfassen. Die Antriebseinheiten sind an einen Kühlmittelkreislauf des Fahrzeugs angeschlossen.

In einer Ausführungsform wird jedes Rad des Kraftfahrzeugs einzeln durch eine dem jeweiligen Rad zugeordnete Antriebseinheit angetrieben. Ein vierrädriges Fahrzeug weist also vier Antriebseinheiten auf, die einen achsindividuellen 4-Rad-Antrieb ermöglichen.

Das erfindungsgemäße Antriebssystem umfasst ein Antriebssteuergerät (ASG), das dafür eingerichtet ist, die von dem Antriebssystem erbrachte Antriebsleistung in Abhängigkeit von der Temperatur der Komponenten der Antriebseinheiten zwischen den Antriebseinheiten aufzuteilen.

Erfindungsgemäß ist das Antriebssteuergerät dafür eingerichtet, die von der Antriebseinheit bzw. den Antriebseinheiten, deren Komponenten in Gesamtschau eine im Vergleich zu den Komponenten der anderen Antriebseinheit(en) die höhere Temperatur aufweisen, erbrachte Antriebsleistung zu reduzieren und die von der Antriebseinheit bzw. den Antriebseinheiten, deren Komponenten demgegenüber eine niedrigere Temperatur aufweisen, erbrachte Antriebsleistung zu erhöhen, um in Summe die geforderte Gesamtantriebsleistung bereitzustellen. Im Falle, dass mehr als zwei Antriebseinheiten vorgesehen sind, wird die Antriebsleistung einer jeweiligen Antriebseinheit in Abhängigkeit davon eingestellt, bspw. reduziert oder erhöht, wie sich die Temperatur der Komponenten dieser jeweiligen Antriebseinheit zu den jeweiligen Temperaturen der Komponenten der anderen Antriebseinheiten verhält.

Die jeweilige Antriebsleistung von Antriebseinheiten, deren Komponenten gegenüber Komponenten anderer Antriebseinheiten eine höhere Temperatur haben, wird gegenüber diesen anderen Antriebseinheiten reduziert und/oder die jeweilige Antriebsleistung dieser anderen Antriebseinheiten wird erhöht.

Die Antriebsleistungen aller Antriebseinheiten ergeben in Summe die geforderte Gesamtantriebsleistung.

In einer Ausführungsform liest das Antriebssteuergerät (ASG) die Temperaturen der Komponenten der installierten elektrischen Maschinen sowie Leistungselektroniken ein und verteilt die Antriebsleistung von Vorderachse nach Hinterachse und umgekehrt in Abhängigkeit der aktuellen jeweiligen Ist-Temperatur der Komponenten.

In einer Ausführungsform des erfindungsgemäßen Antriebssystems umfasst dessen Kühlmittelkreislauf außer den elektrischen Maschinen keine Kühlmittelpumpe. Es ist also keine separate Kühlmittelpumpe zur Förderung des Kühlmittels im Kühlmittelkreislauf vorhanden.

In einer Ausführungsform wird zur Kühlung der Antriebskomponenten und des Kühlmittels die Kühlwirkung der Wärmeabstrahlung der Komponenten oder des Fahrtwinds genutzt.

Erfindungsgemäß wird das Kühlmittel durch in den elektrischen Maschinen auftretende Fliehkräfte durch den Kühlmittelkreislauf gefördert. Die elektrischen Maschinen (E-Maschinen) erzeugen im Betrieb ab einer bestimmten Drehzahl eine selbstfördernde Pumpenwirkung, die wiederum auf der zwischenzeitlich deaktivierten Antriebsachse zusätzliche Kühlwirkung erzeugt. In den elektrischen Maschinen wird erfahrungsgemäß ab einer Geschwindigkeit von ca. 40 km/h ein ausreichender Kühlmittelvolumenstrom erreicht.

Das ASG regelt die Verteilung der Sollmomentenanforderung so, dass einerseits die Verlustleistung reduziert, jedoch anderseits das benötigte Drehmoment zum Erreichen der gewünschten Geschwindigkeit bzw. der für die selbstfördernde Pumpwirkung der E-Maschinen erforderliche Drehzahl bereitgestellt wird.

Gegenstand der Erfindung ist auch ein Verfahren zum Betreiben eines flüssigkeitsgekühlten elektrischen Antriebssystems für ein Kraftfahrzeug, das mindestens zwei eine elektrische Maschine und eine ihr zugeordnete Leistungselektronik umfassende Antriebseinheiten aufweist.

Erfindungsgemäß wird dabei die von dem Antriebssystem erbrachte Antriebsleistung in Abhängigkeit von der jeweiligen Temperatur der Komponenten der Antriebseinheiten zwischen den Antriebseinheiten aufgeteilt.

Erfindungsgemäß wird die von der Antriebseinheit bzw. den Antriebseinheiten, deren Komponenten die höhere Temperatur aufweisen, erbrachte Antriebsleistung reduziert und die von der Antriebseinheit bzw. den Antriebseinheiten, deren Komponenten die niedrigere Temperatur aufweisen, erbrachte Antriebsleistung erhöht.

Erfindungsgemäß wird die Antriebsleistung zwischen Vorderachse und Hinterachse aufgeteilt, damit die E-Maschine sowie der Pulswechselrichter an der entsprechenden Achse nur dann betrieben werden, wenn deren Temperatur dies zulässt. Ist die Ist-Temperatur zu hoch, wird die Antriebsleistung der jeweils anderen Antriebsachse zugeteilt. Dadurch erhält die zuvor genutzte Antriebsachse eine Erholungsphase zur Abkühlung und steht anschließend erneut zur Verfügung. Das Mehr-Maschinen-Konzept bietet die Möglichkeit, bedarfsgesteuert die Sollmomentenvorgabe zu ändern und zwischen den verbauten E-Maschinen aufzuteilen, z.B. bei Ausfall des Kühlsystems. Dies ist besonders für einen Limp-Home-Mode interessant, falls die Kühlmittelpumpe defekt ist.

In einer Ausführungsform wird die intelligente Temperatur-basierte Ansteuerung der Sollmomentenvorgabe in einer Fehler-Situation zur Verlängerung der Fahrzeugverfügbarkeit bzw. für einen energiesparenden Betrieb von Kühlmittelpumpen im Kühlmittelkreislauf genutzt.

Steigt durch die Drehmomenterzeugung die Temperatur des stehenden Kühlmittels in allen zur Verfügung stehenden elektrischen Antrieben auf kritische Grenzen, so wird ein Umpumpen des Kühlmittels durch den Kühlmittelkreislauf erforderlich. Diese Funktion kann nun statt mit einer Kühlmittelpumpe durch die E-Maschinen selbst realisiert werden.

Die Pumpenwirkung entsteht ohne fördernde Elemente (wie z.B. einen Schneckentrieb) nur durch die entstehende Fliehkraft. Ab einer gewissen Drehzahl reicht die Fliehkraft aus, damit eine nötige Verdrängungsleistung und ein daraus resultierender Kühlmittelvolumenstrom entstehen. Damit können die Komponenten wieder ausreichend gekühlt werden, damit die Komponenten erneut zum Vortrieb und damit zum erneuten Überschreiten der Grenzdrehzahl für den Dauerbetrieb genutzt werden können.

Erfindungsgemäß werden die elektrischen Maschinen bei einer Drehzahl betrieben, bei der das Kühlmittel durch in den elektrischen Maschinen auftretende Fliehkräfte durch den Kühlkreislauf gefördert wird. Das erfindungsgemäße Antriebssystem und das erfindungsgemäße Verfahren bieten den Vorteil, dass ein Betrieb des elektrischen Antriebs auch ohne bzw. mit reduzierter Kühlmittelleistung möglich ist. Dadurch können Kosten, Gewicht und Energie eingespart werden. Auch kann dadurch ein Notlauf des Kraftfahrzeugs bei defekter Kühlmittelpumpe gewährleistet werden.

Weitere Vorteile und Ausgestaltungen der Erfindung ergeben sich aus der Beschreibung und der beiliegenden Zeichnung.

Die Erfindung ist anhand einer Ausführungsform in der Zeichnung schematisch dargestellt und wird unter Bezugnahme auf die Zeichnung schematisch und ausführlich beschrieben. Es zeigt:

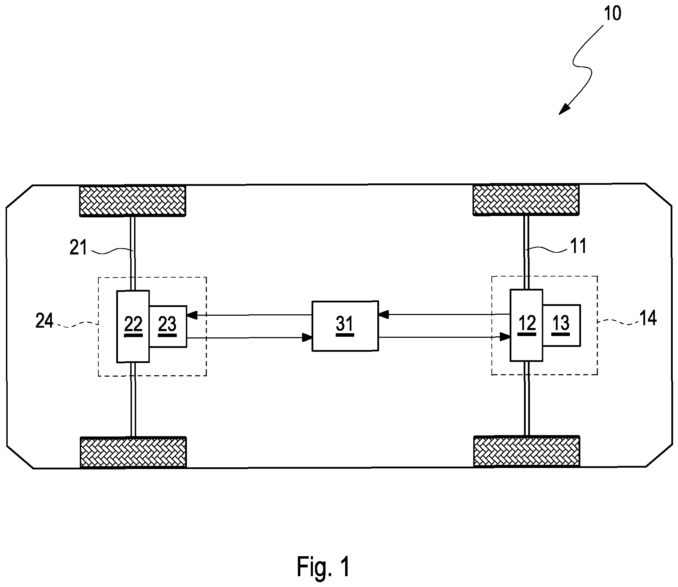

Figur 1 eine schematische Darstellung einer Ausführungsform des erfindungsgemäßen Antriebssystems.

Figur 1 zeigt schematisch eine Ausführungsform des erfindungsgemäßen Antriebssystems 10. Dargestellt ist ein zweiachsiges Kraftfahrzeug. Einer ersten Achse 11 ist eine erste elektrische Maschine 12 (EM) und eine sie ansteuernde erste Leistungselektronik 13 (LE) zugeordnet. Einer zweiten Achse 21 ist eine zweite elektrische Maschine 22 und eine sie ansteuernde zweite Leistungselektronik 23 zugeordnet. Ein Antriebssteuergerät 31 (ASG) kommuniziert mit den jeweils eine elektrische Maschine 12, 22 und die ihr zugeordnete Leistungselektronik 13, 23 umfassenden Antriebseinheiten 12/13 und 22/23.

Das ASG 31 liest die Komponenten-Temperaturen der installierten E-Maschinen 12, 22 sowie der Leistungselektroniken 13, 23 ein und verteilt die Antriebsleistung in Abhängigkeit der aktuellen Ist-Temperatur der Komponenten zwischen den Achsen 11 und 21. Ist die Temperatur der Komponenten der EM 12 und der LE 13 der Achse 11 höher als die Temperatur der Komponenten der EM 22 und der LE 23 der Achse 21, so verschiebt das ASG 31 Antriebsleistung von der Achse 11 auf die Achse 21. Umgekehrt verschiebt das ASG 31 Antriebsleistung von der Achse 21 auf die Achse 11, wenn die Temperatur der Komponenten der EM 22 und der LE 23 der Achse 21 höher ist als die Temperatur der Komponenten der EM 12 und der LE 13 der Achse 11.

Das ASG 31 verteilt die zur Verfügung stehende Antriebsleistung der Antriebseinheiten 14 und 24 selbstständig, um einerseits die Verlustleistung der aktuell heißeren Antriebseinheit zu reduzieren, anderseits jedoch das zum Erreichen der Geschwindigkeitsschwelle, bei der die Drehzahl der elektrischen Maschinen 12 und 22 ausreicht, um für einen genügenden Kühlmittelstrom durch den Kühlmittelkreislauf des elektrischen Antriebssystems 10 zu sorgen, benötigte Drehmoment bereitzustellen.

Erfahrungsgemäß wird ab einer Geschwindigkeit von ca. 40 km/h ein ausreichender Kühlmittelvolumenstrom durch die in den elektrischen Maschinen 12 und 22 wirkenden Fliehkräfte erzeugt. Fahrversuche zeigen, dass im normalen Kundenzyklus ein Vortrieb mit leicht eingeschränkter Antriebsleistung für eine unbegrenzte Zeit aufrechterhalten werden kann. Auch höhere Endgeschwindigkeiten sind somit ohne separate Kühlmittelpumpe zu erreichen.

### Bezuqszeichenliste

- 10: elektrisches Antriebssystem
- 11: Fahrzeugachse
- 12: elektrische Maschine (EM)
- 13: Leistungselektronik (LE)
- 14: Antriebseinheit
- 21: Fahrzeugachse
- 22: elektrische Maschine (EM)
- 23: Leistungselektronik (LE)
- 24: Antriebseinheit
- 31: Antriebsteuergerät (ASG)

## Patentansprüche

1. Flüssigkeitsgekühltes elektrisches Antriebssystem (10) für ein Kraftfahrzeug, das mindestens aufweist: zwei eine elektrische Maschine (12, 22) und eine ihr zugeordnete Leistungselektronik (13, 23) umfassende Antriebseinheiten (14, 24), die an einen Kühlmittelkreislauf des Fahrzeugs angeschlossen sind, worin das Kühlmittel durch in den elektrischen Maschinen (12, 22) auftretende Fliehkräfte durch den Kühlmittelkreislauf gefördert wird, und ein Antriebssteuergerät (31), das dafür eingerichtet ist, die von dem Antriebssystem erbrachte Antriebsleistung in Abhängigkeit von der Temperatur der Komponenten der Antriebseinheiten (14, 24) zwischen den Antriebseinheiten (14, 24) aufzuteilen, wobei das Antriebssteuergerät (31) dafür eingerichtet ist, die von der Antriebseinheit (14, 24), deren Komponenten die höhere Temperatur aufweisen, erbrachte Antriebsleistung zu reduzieren und die von der Antriebseinheit (14, 24), deren Komponenten die niedrigere Temperatur aufweisen, erbrachte Antriebsleistung zu erhöhen, und die elektrischen Maschinen (12, 22) bei einer Drehzahl zu betreiben, bei der das Kühlmittel durch in den elektrischen Maschinen (12, 22) auftretende Fliehkräfte durch den Kühlmittelkreislauf gefördert wird.

2. Flüssigkeitsgekühltes elektrisches Antriebssystem (10) nach Anspruch 1, worin jedes Rad einzeln durch eine zugeordnete Antriebseinheit (14, 24) angetrieben wird.

3. Verfahren zum Betreiben eines flüssigkeitsgekühlten elektrischen Antriebssystems (10) für ein Kraftfahrzeug, das mindestens zwei eine elektrische Maschine (12, 22) und eine ihr zugeordnete Leistungselektronik (13, 23) umfassende Antriebseinheiten (14, 24) aufweist, die an einen Kühlmittelkreislauf des Fahrzeugs angeschlossen sind, worin das Kühlmittel durch in den elektrischen Maschinen (12, 22) auftretende Fliehkräfte durch den Kühlmittelkreislauf gefördert wird, bei dem die von dem Antriebssystem erbrachte Antriebsleistung in Abhängigkeit von der Temperatur der Komponenten der Antriebseinheiten (14, 24) zwischen den Antriebseinheiten (14, 24) aufgeteilt wird, wobei die von der Antriebseinheit (14, 24), deren Komponenten die höhere Temperatur aufweisen, erbrachte Antriebsleistung reduziert und die von der Antriebseinheit (14, 24), deren Komponenten die niedrigere Temperatur aufweisen, erbrachte Antriebsleistung erhöht wird, und wobei die elektrischen Maschinen (12, 22) bei einer Drehzahl betrieben werden, bei der das Kühlmittel durch in den elektrischen Maschinen (12, 22) auftretende Fliehkräfte durch den Kühlmittelkreislauf gefördert wird.

## Claims

1. Liquid-cooled electric drive system (10) for a motor vehicle which has at least: two drive units (14, 24) comprising an electric machine (12, 22) and power electronics (13, 23) assigned thereto, which drive units are connected to a coolant circuit of the motor vehicle, wherein the coolant is conveyed through the coolant circuit by centrifugal forces occurring in the electric machines (12, 22), and a drive control unit (31) which is configured to divide the drive power produced by the drive system between the drive units (14, 24) depending on the temperature of the components of the drive units (14, 24), wherein the drive control unit (31) is configured to reduce the drive power produced by the drive unit (14, 24) whose components have the higher temperature and to increase the drive power produced by the drive unit (14, 24) whose components have the lower temperature, and to operate the electric machines (12, 22) at a speed at which the coolant is conveyed through the coolant circuit by centrifugal forces occurring in the electric machines (12, 22).

2. Liquid-cooled electric drive system (10) according to claim 1, wherein each wheel is individually driven by an associated drive unit (14, 24).

3. Method for operating a liquid-cooled electric drive system (10) for a motor vehicle which has at least two drive units (14, 24) comprising an electric machine (12, 22) and power electronics (13, 23) assigned thereto, which drive units are connected to a coolant circuit of the motor vehicle, wherein the coolant is conveyed through the coolant circuit by centrifugal forces occurring in the electric machines (12, 22), in which the drive power produced by the drive system is divided between the drive units (14, 24) depending on the temperature of the components of the drive units (14, 24), wherein the drive power produced by the drive unit (14, 24) whose components have the higher temperature is reduced, and the drive power produced by the drive unit (14, 24) whose components have the lower temperature is increased, and wherein the electric machines (12, 22) are operated at a speed at which the coolant is conveyed through the coolant circuit by centrifugal forces occurring in the electric machines (12, 22).

## Revendications

1. Système d'entraînement électrique refroidi par liquide (10) pour un véhicule automobile, comprenant au moins : deux unités d'entraînement (14, 24) comprenant un moteur électrique (12, 22) et une électronique de puissance (13, 23) associée à celui-ci, qui sont connectés à un circuit de fluide de refroidissement du véhicule, dans lequel le fluide de refroidissement est transporté à travers le circuit de fluide de refroidissement par des forces centrifuges se produisant dans les moteurs électriques (12, 22), et un appareil de commande d'entraînement (31) qui est adapté pour répartir la puissance d'entraînement fournie par le système d'entraînement entre les unités d'entraînement (14, 24) en fonction de la température des composants des unités d'entraînement (14, 24), dans lequel l'appareil de commande d'entraînement (31) est adapté pour réduire la puissance d'entraînement fournie par l'unité d'entraînement (14, 24) dont les composants sont à la température la plus élevée et pour augmenter la puissance d'entraînement fournie par l'unité d'entraînement (14, 24) dont les composants sont à la température la moins élevée, et pour faire fonctionner les moteurs électriques (12, 22) à une vitesse de rotation à laquelle le fluide de refroidissement est transporté à travers le circuit de fluide de refroidissement par des forces centrifuges se produisant dans les moteurs électriques (12, 22).

2. Système d'entraînement électrique refroidi par liquide (10) selon la revendication 1, dans lequel chaque roue est entraînée individuellement par une unité d'entraînement associée (14, 24).

3. Procédé pour faire fonctionner un système d'entraînement électrique (10) refroidi par liquide pour un véhicule automobile, qui comporte au moins deux unités d'entraînement (14, 24) qui comprennent un moteur électrique (12, 22) et une électronique de puissance (13, 23) qui lui est associée et qui sont raccordées à un circuit de fluide de refroidissement du véhicule, dans lequel le fluide de refroidissement est transporté à travers le circuit de fluide de refroidissement par des forces centrifuges qui se produisent dans les moteurs électriques (12, 22), dans lequel la puissance d'entraînement qui est fournie par le système d'entraînement est répartie entre les unités d'entraînement (14, 24) en fonction de la température des composants des unités d'entraînement (14, 24), dans lequel la puissance d'entraînement qui est fournie par l'unité d'entraînement (14, 24) dont les composants présentent la température la plus élevée est réduite et la puissance d'entraînement qui est fournie par l'unité d'entraînement (14, 24) dont les composants présentent la température la moins élevée est augmentée, et dans lequel les moteurs électriques (12, 22) sont amenés à fonctionner à une vitesse de rotation à laquelle le fluide de refroidissement est transporté à travers le circuit de fluide de refroidissement par des forces centrifuges qui se produisent dans les moteurs électriques (12, 22).
